# EUROPÄISCHE PATENTANMELDUNG

(11) **EP 4 672 427 A1**
(43) Veröffentlichungstag der Anmeldung: **31.12.2025**
(21) Anmeldenummer: 25182244.1
(22) Anmeldetag: 12.06.2025
(51) Int. Cl.: H01M 10/613, H01M 10/625, H01M 10/653, H01M 10/6551, H01M 10/6555, H01M 10/659, H01M 50/383

(54) **ELEKTRISCHE ENERGIESPEICHERVORRICHTUNG, AUFWEISEND EINE KÜHLPLATTE**

(30) Priorität: 27.06.2024 DE 102024002096
(71) Anmelder: MAN Truck & Bus SE, 80995 München (DE)
(72) Erfinder: Preissler, Martin, 80995 München (DE); Boegershausen, Mathias, 80995 München (DE); Singh, Vaibhav Kumar, 80995 München (DE)

(57) **Zusammenfassung**

Die Erfindung betrifft eine elektrische Energiespeichervorrichtung (10) für ein Fahrzeug. Die elektrische Energiespeichervorrichtung (10) weist eine erste Zell-Anordnungsebene (12), eine zweite Zell-Anordnungsebene (14) und eine Kühlplatte (16) auf. Die erste Zell-Anordnungsebene (12) weist mindestens eine Speicherzelle (12a-d), vorzugsweise mehrere Speicherzellen (14a-d). Die zweite Zell-Anordnungsebene (14) weist mindestens eine Speicherzelle (14a-d), vorzugsweise mehrere Speicherzellen (14a-d) auf, wobei die zweite Zell-Anordnungsebene (14) benachbart zu, vorzugsweise unterhalb, der ersten Zell-Anordnungsebene (12) angeordnet ist. Die Kühlplatte (16) ist zwischen der ersten Zell-Anordnungsebene (12) und der zweiten Zell-Anordnungsebene (14) angeordnet ist und weist eine erste Oberfläche (16a) und eine zweite Oberfläche (16b) auf. Auf der ersten Oberfläche (16a) ist die mindestens eine Speicherzelle (12a-d) der ersten Zell-Anordnungsebene (12) angeordnet ist. An der zweiten Oberfläche (16b) weist die Kühlplatte (16) mehrere Finnen (18) auf, die der mindestens einen Speicherzelle (14a-d) der zweiten Zell-Anordnungsebene (14) zugewandt sind, um Partikel einer Entgasungsemission aus der mindestens einen Speicherzelle (14a-d) der zweiten Zell-Anordnungsebene (14) einzufangen und/oder eine Entgasungsemission aus der mindestens einen Speicherzelle (14a-d) der zweiten Zell-Anordnungsebene (14) zu kühlen. Die Finnen (18) können ein Material aufweisen, dessen Schmelzpunkt unterhalb der Partikelemission (ca. 800-1000°C) liegt.

## Beschreibung

Die Erfindung betrifft eine elektrische Energiespeichervorrichtung und ein Fahrzeug, vorzugsweise Kraftfahrzeug, aufweisend eine elektrische Energiespeichervorrichtung.

Bei aus der Praxis bekannten Fahrzeugbatterien, wie sie z. B. als Energiespeicher bzw. als Traktionsbatterie in Hybridfahrzeugen oder Elektrofahrzeugen zum Einsatz kommen, kann es z. B. aufgrund eines thermischen Durchgehens (engl. "thermal runaway", worunter eine Überhitzung einer Speicherzelle aufgrund eines sich selbst verstärkenden, Wärme produzierenden Prozesses zu verstehen ist) und/oder aufgrund einer Beschädigung der Fahrzeugbatterie zu einem Entgasen (engl. "venting") der Fahrzeugbatterie kommen. Die Entgasungsemission selbst und/oder in der Entgasungsemission enthalten Partikel können Temperaturen von bis zu 800-1000°C erreichen. Daher können die Entgasungsemission selbst und/oder in der Entgasungsemission enthaltene Partikel zu einem Aufheizen von Nachbarzellen bis zur Schädigung derselben führen. Dadurch kann es z. B. zu einem thermischen Durchgehen weiterer Speicherzellen kommen (engl. "thermal propagation"). Ferner können die heißen Partikel und/oder die Entgasungsemission ein lokales Schmelzen der Komponenten des Energiespeichers verursachen. Um dies zu vermeiden, ist es wünschenswert, die heißen Partikel und/oder die Entgasungsemission aus dem Energiespeicher (z. B. Batteriepack) herausführen oder sie sicher einfangen, ohne weitere Schäden zu verursachen.

Insbesondere bei Energiespeichern mit mehreren übereinander angeordneten Zell-Anordnungsebenen ergibt sich zudem das Problem, dass insbesondere die Speicherzellen einer oberen Zell-Anordnungsebene durch eine Entgasungsemission einer darunter angeordneten Zell-Anordnungsebene besonders hinsichtlich einer Beschädigung gefährdet sind.

Die Aufgabe der vorliegenden Erfindung ist es, eine verbesserte Technik zum Kühlen einer Entgasungsemission und/oder zum Einfangen von Partikeln einer Entgasungsemission bereitzustellen, mit der Nachteile bekannter Ansätze vermieden werden können. Die Aufgabe der Erfindung ist es insbesondere, mit mehreren Zell-Anordnungsebenen ausgestattete Energiespeichervorrichtungen hinsichtlich der Leistungsfähigkeit der Kühlung einer Entgasungsemission und/oder dem Einfangen von Partikeln einer Entgasungsemission zu verbessern.

Diese Aufgaben werden durch Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Aspekt wird eine elektrische Energiespeichervorrichtung bereitgestellt.

Die elektrische Energiespeichervorrichtung weist eine erste Zell-Anordnungsebene, eine zweite Zell-Anordnungsebene und eine Kühlplatte auf.

Die erste Zell-Anordnungsebene weist mindestens eine Speicherzelle (z. B. mehrere Speicherzellen) auf.

Auch die zweite Zell-Anordnungsebene weist mindestens eine Speicherzelle (z. B. mehrere Speicherzellen) auf. Die zweite Zell-Anordnungsebene ist benachbart zu (z. B. in Einbaulage der elektrischen Energiespeichervorrichtung unterhalb) der ersten Zell-Anordnungsebene angeordnet.

Die Kühlplatte ist zwischen der ersten Zell-Anordnungsebene und der zweiten Zell-Anordnungsebene angeordnet. Die Kühlplatte weist eine erste Oberfläche und eine zweite Oberfläche auf. Auf der ersten Oberfläche ist die mindestens eine Speicherzelle der ersten Zell-Anordnungsebene angeordnet (und z. B. thermisch mit der Kühlplatte kontaktiert). Die Kühlplatte weist an der zweiten Oberfläche mehrere Finnen auf, die der mindestens einen Speicherzelle der zweiten Zell-Anordnungsebene zugewandt sind, um (z. B. im Falle eines thermischen Durchgehens der zumindest einen Speicherzelle der zweiten Zell-Anordnungsebene) Partikel einer Entgasungsemission aus der mindestens einen Speicherzelle der zweiten Zell-Anordnungsebene einzufangen und/oder eine Entgasungsemission aus der mindestens einen Speicherzelle der zweiten Zell-Anordnungsebene zu kühlen.

Ein Vorteil kann z. B. darin liegen, dass die ohnehin vorhandene Kühlplatte der ersten Zell-Anordnungsebene vorteilhaft in einer Art Doppelfunktion einerseits zum Kühlen der darauf angeordneten mindestens einen Speicherzelle, aber andererseits auch zum Kühlen und/oder zum Einfangen von Partikeln einer Entgasungsemission aus der mindestens einen Speicherzelle der zweiten Anordnungsebene verwendet werden kann.

Dadurch kann sich z. B. für elektrische Energiespeicher mit mehreren Zell-Anordnungsebenen ein besonders kompakter und damit Bauraum-sparender Aufbau ergeben.

Darüber hinaus kann über die Kühlplatte typischerweise eine besonders leistungsstarke Kühlung bereitgestellt werden, die in der vorgeschlagenen Lösung vorteilhaft nicht nur zum Kühlen der darauf angeordneten mindestens einen Speicherzelle, sondern auch zum Abführen der Wärme aus der Entgasungsemission genutzt werden kann. Mit anderen Worten kann mittels der Kühlplatte eine besonders hohe Kühlleistung bereitstellbar sein.

Insgesamt kann sich ergeben, dass die Betriebssicherheit der elektrischen Energiespeichervorrichtung erhöht wird.

Beispielsweise kann die mindestens eine Speicherzelle der ersten Zell-Anordnungsebene die erste Oberfläche der Kühlplatte direkt kontaktieren und/oder direkt an dieser anliegen.

Ferner kann die zweite Oberfläche der Kühlplatte beabstandet zu der mindestens einen Speicherzelle der zweiten Zell-Anordnungsebene angeordnet sein.

Die Zell-Anordnungsebenen können z. B. Batterie-Layer sein.

Gemäß einem Ausführungsbeispiel kann die Kühlplatte mit einem Kühlfluid durchströmbar ist, um über die erste Oberfläche Wärme der mindestens einen Speicherzelle der ersten Zell-Anordnungsebene und/oder über die zweite Oberfläche Wärme der Entgasungsemission abzutransportieren. Beispielsweise kann in der Kühlplatte eine Kühlmittelführung integriert sein, die das Kühlmittel in einen benachbart zu den mehreren Finnen angeordneten Bereich der Kühlplatte führt. Bevorzugt kann das Kühlmittel eine Kühlflüssigkeit sein.

Denkbar ist grundsätzlich auch, dass die mehreren Finnen mit dem Kühlmittel durchströmbar sind.

Dadurch kann die an die mindestens eine auf der Kühlplatte angeordnete Speicherzelle und/oder die Entgasungsemission übertragene Kühlleistung weiter gesteigert werden. Die Kühlplatte kann eine aktive Kühlung der auf ihr angeordneten mindestens einen Speicherzelle und/oder der mehreren Finnen bereitstellen.

Gemäß einem Ausführungsbeispiel kann die Kühlplatte einen (z. B. im Wesentlichen quaderförmigen) Hauptkörperbereich und eine (z. B. im Wesentlichen quaderförmige) Wärmeschutzplatte (z. B. Stahlplatte) aufweisen. Die Wärmeschutzplatte kann zwischen den mehreren Finnen und dem Hauptkörperbereich angeordnet sein.

In diesem Fall ist denkbar, dass die zweite Oberfläche durch eine der mindestens einen Speicherzelle der zweiten Zell-Anordnungsebene zugewandten Oberfläche der Wärmeschutzplatte gebildet ist.

Bevorzugt kann der Hauptkörperbereich die mindestens eine Speicherzelle, vorzugsweise alle Speicherzellen, der zweiten Zell-Anordnungsebene vollständig überdecken.

Darüber hinaus können die mehreren Finnen auf die Wärmeschutzplatte geschweißt sein.

Dadurch kann vorteilhaft erreicht werden, dass der Hauptkörperbereich vor der Entgasungsemission und/oder vor Partikeln der Entgasungsemission geschützt ist. Damit kann eine Beschädigung des Hauptkörperbereichs durch die Entgasungsemission vermieden oder gemindert werden. Ferner kann durch ein Einfangen der Partikel die Temperatur der Entgasungsemission effektiv reduziert werden.

Gemäß einem Ausführungsbeispiel kann die zweite Oberfläche der Kühlplatte zu der zweiten Zell-Anordnungsebene derart beabstandet angeordnet ist, dass ein Entgasungsraum zur Aufnahme der Entgasungsemission gebildet ist, wobei die mehreren Finnen in den Entgasungsraum hineinragen.

Beispielsweise kann der Entgasungsraum für die Entgasungsemission einen Strömungspfad definieren (z. B. hin zu einem Auslassventil der elektrischen Energiespeichervorrichtung).

Gemäß einem Ausführungsbeispiel können die mehreren Finnen derart zueinander versetzt angeordnet sind, dass zwischen jeweils zwei benachbarten Finnen der mehreren Finnen und/oder mehreren Finnen-Reihen der mehreren Finnen jeweils eine Gasdurchtrittsöffnung angeordnet ist.

Die Gasdurchtrittsöffnungen können z. B. Umlenkposition und/oder Engstellen für die Entgasungsemission bilden, wodurch der Entgasungsemission Wärmeenergie entzogen und/oder Partikel ausfallen können.

Das Einfangen der Partikel und/oder das Kühlen der Entgasungsemission kann somit weiter gesteigert werden.

Gemäß einem Ausführungsbeispiel können die mehreren Finnen angeordnet und/oder geformt und/oder dimensioniert sein, die über die mehreren Finnen strömende Entgasungsemission zu verwirbeln.

Denkbar ist beispielsweise, dass die mehreren Finnen quer zum Strömungspfad wie hierin offenbart orientiert sind, um ein Umlenken und/oder Verwirbeln der Entgasungsemission zu bewirken.

Dadurch kann z. B. ein besonders effektives Einfangen der Partikel und/oder Kühlen der Entgasungsemission gewährleistet sein.

Gemäß einem Ausführungsbeispiel können die mehreren Finnen ausgebildet sein, Wärme aus der Entgasungsemission an die Kühlplatte zu übertragen.

Beispielsweise ist denkbar, dass die mehreren Finnen ein Material mit hoher Wärmeleitfähigkeit aufweisen. Z. B. können die mehreren Finnen ein metallisches Material aufweisen.

Dadurch kann z. B. die Wärmeübertragung an die Kühlplatte vorteilhaft weiter gesteigert werden.

Gemäß einem Ausführungsbeispiel können die mehreren Finnen an die Kühlplatte und/oder die Wärmeschutzplatte geschweißt sein.

Dadurch kann z. B. eine besonders gute Wärmeübertragung zwischen den mehreren Finnen und der Kühlplatte gewährleistet werden.

Grundsätzlich ist aber auch jede andere, zweckmäßig geeignete Befestigung der mehren Finnen an der Kühlplatte denkbar. Denkbar ist ferner, dass die mehreren Finnen integral-einstückig mit der Kühlplatte ausgebildet sind.

Gemäß einem Ausführungsbeispiel können die mehreren Finnen ein Material aufweisen, dessen Schmelzpunkt unterhalb einer Partikeltemperatur der Entgasungsemission liegt, um die Partikel durch ein (z. B. lokales) Verschmelzen mit den mehreren Finnen einzufangen und/oder die Entgasungsemission zu kühlen.

Dazu kann z. B. die typischerweise erreichte Partikeltemperatur (z. B. aus Experimenten) vorbekannt sein und das Material der mehreren Finnen entsprechend ausgewählt werden.

Dies kann auch ein wirksames Mittel zur Senkung der Temperatur der Entgasungsemission sein.

Gemäß einem Ausführungsbeispiel können der mindestens einen Speicherzelle der zweiten Zell-Anordnungsebene mehrere Finnen zugeordnet sein.

Beispielsweise ist denkbar, dass z. B. direkt oberhalb der mindestens einen Speicherzelle der zweiten Zell-Anordnungsebene mehrere (z. B. mindestens fünf, mindestens zehn oder mindestens zwölf) Finnen angeordnet sind.

Gemäß einem Ausführungsbeispiel kann die mindestens eine Speicherzelle der zweiten Zell-Anordnungsebene eine Entgasungseinrichtung (z. B. ein Entgasungsventil) aufweisen, die ausgebildet ist, die Entgasungsemission (z. B. zumindest abschnittsweise und/oder initial und/oder direkt nach dem Austreten aus der jeweiligen Speicherzelle) in Richtung der mehreren Finnen zu leiten.

Denkbar ist aber auch, dass die Entgasungsemission an den mehreren Finnen umgelenkt wird und z. B. im Wesentlichen parallel zu den Zell-Anordnungsebenen aus der elektrischen Energiespeichervorrichtung geführt wird.

Gemäß einem Ausführungsbeispiel kann die mindestens eine Speicherzelle der ersten Zell-Anordnungsebene mehrere Speicherzellen umfassen, die zumindest einen Batteriezellenstapel bilden, indem die mehreren Speicherzellen auf der ersten Zell-Anordnungsebene stapelartig hintereinander angeordnet sind. Bevorzugt weist die erste Zell-Anordnungsebene mehrere (z. B. vier) benachbarte dieser Batteriezellenstapel auf.

Alternativ oder ergänzend können die mehreren Speicherzellen der ersten Zell-Anordnungsebene auch zumindest ein Batteriemodul (z. B. mehrere auf der ersten Zell-Anordnungsebene benachbart zueinander angeordnete Batteriemodule) bilden.

Alternativ oder ergänzend kann die mindestens eine Speicherzelle der zweiten Zell-Anordnungsebene mehrere Speicherzellen umfassen, die zumindest einen Batteriezellenstapel bilden, indem die mehreren Speicherzellen auf der zweiten Zell-Anordnungsebene stapelartig hintereinander angeordnet sind. Bevorzugt weist die zweite Zell-Anordnungsebene mehrere (z. B. vier) benachbarte dieser Batteriezellenstapel auf.

Alternativ oder ergänzend können die mehreren Speicherzellen der zweiten Zell-Anordnungsebene auch zumindest ein Batteriemodul (z. B. mehrere auf der zweiten Zell-Anordnungsebene benachbart zueinander angeordnete Batteriemodule) bilden.

Die mehreren Speicherzellen der ersten Zell-Anordnungsebene und/oder die mehreren Speicherzellen der zweiten Zell-Anordnungsebene können z. B. zu Batteriemodulen zusammengefasst sein, die über Klemmen und Stromschienen elektrisch kontaktiert nebeneinander angeordnet sind.

Dadurch kann sich z. B. ein besonders kompakter Aufbau der elektrischen Energiespeichervorrichtung ergeben.

Gemäß einem Ausführungsbeispiel kann die elektrische Energiespeichervorrichtung eine weitere Zell-Anordnungsebene aufweisen. Die weitere Zell-Anordnungsebene kann mindestens eine Speicherzelle (z. B. mehrere Speicherzellen) aufweisen. Die weitere Zell-Anordnungsebene kann benachbart zu (z. B. oberhalb) der ersten Anordnungsebene angeordnet sein.

Die elektrische Energiespeichervorrichtung kann eine weitere Kühlplatte aufweisen, die zwischen der ersten Zell-Anordnungsebene und der weiteren Zell-Anordnungsebene angeordnet ist. Die weitere Kühlplatte kann eine Oberfläche und eine weitere Oberfläche aufweisen. Auf der Oberfläche kann die mindestens eine Speicherzelle der weiteren Zell-Anordnungsebene angeordnet sein. Die weitere Kühlplatte kann an der weiteren Oberfläche weitere Finnen aufweisen, die der mindestens einen Speicherzelle der ersten Zell-Anordnungsebene zugewandt sind, um Partikel einer Entgasungsemission aus der mindestens einen Speicherzelle der ersten Zell-Anordnungsebene einzufangen und/oder eine Entgasungsemission aus der mindestens einen Speicherzelle der ersten Zell-Anordnungsebene zu kühlen.

Die hierin beschriebene Technik soll dabei nicht auf drei Zell-Anordnungsebenen beschränkt sein. Für den Fachmann ist ersichtlich, dass die hierin offenbarte Technik auf beliebig viele übereinander angeordnete Zell-Anordnungsebenen anwendbar ist.

Insofern kann die elektrische Energiespeichervorrichtung auch mehr als drei Zell-Anordungsebenen aufweisen, wobei zwischen jeweils zwei benachbarten der mehr als drei Zell-Anordnungsebenen jeweils eine Kühlplatte wie hierin offenbart angeordnet ist.

Gemäß einem Ausführungsbeispiel kann die elektrische Energiespeichervorrichtung eine Finnen-lose Kühlplatte aufweisen, auf der die mindestens eine Speicherzelle der zweiten Zell-Anordnungsebene angeordnet (und z. B. thermisch kontaktiert) ist.

Dadurch kann auch eine effektive Kühlung der unteren und/oder untersten der Zell-Anordnungsebenen erreicht werden.

Gemäß einem zweiten Aspekt wird ein Fahrzeug bereitgestellt. Das Fahrzeug kann eine elektrische Energiespeichervorrichtung wie hierin offenbart aufweisen.

Bevorzugt handelt es sich dabei um ein Kraftfahrzeug, vorzugsweise Nutzfahrzeug. Mit anderen Worten kann es sich um ein Kraftfahrzeug handeln, das zweckmäßig durch seine Bauart und Einrichtung insbesondere zur Beförderung von Personen, zum Transport von Gütern oder zum Ziehen von Anhängerfahrzeugen ausgelegt ist. Beispielsweise kann das Nutzfahrzeug z. B. ein Lastkraftwagen sein.

Grundsätzlich kann das Fahrzeug aber auch z. B. ein Flugzeug oder ein schienengebundenes Fahrzeug sein.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer elektrischen Energiespeichervorrichtung gemäß einer Ausführungsform;
- Figur 2: eine schematische Teil-Darstellung einer elektrischen Energiespeichervorrichtung gemäß einer Ausführungsform;
- Figur 3: eine schematische Darstellung einer elektrischen Energiespeichervorrichtung gemäß einer Ausführungsform;
- Figur 4: eine schematische Darstellung einer elektrischen Energiespeichervorrichtung gemäß einer Ausführungsform; und
- Figur 5: ein vergrößerter Ausschnitt der elektrischen Energiespeichervorrichtung aus Figur 4.

Die in den Figuren gezeigten Ausführungsbeispiele stimmen zumindest teilweise überein, so dass ähnliche oder identische Teile mit den gleichen Bezugszeichen versehen sind und zu deren Erläuterung auch auf die Beschreibung der anderen Figuren verwiesen wird, um Wiederholungen zu vermeiden.

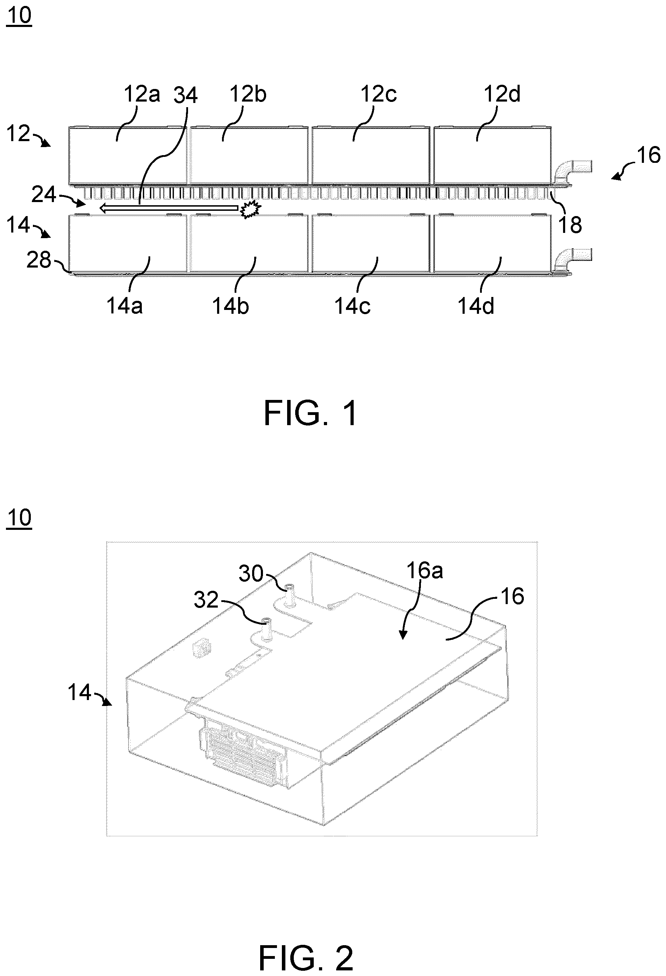

Figur 1 zeigt eine schematische Darstellung einer elektrischen Energiespeichervorrichtung 10.

Die elektrische Energiespeichervorrichtung 10 weist mehrere Zell-Anordnungsebenen 12, 14 auf.

Lediglich exemplarisch sind in Figur 1 eine erste Zell-Anordnungsebene 12 und eine zweite Anordnungsebene 14 gezeigt. In hier nicht dargestellten Ausführungsbeispielen kann die elektrische Energiespeichervorrichtung 10 aber auch noch weitere Zell-Anordnungsebenen aufweisen.

Die erste Zell-Anordnungsebene 12 und eine zweite Anordnungsebene 14 sind benachbart zueinander (z. B. in Einbaulage der elektrischen Energiespeichervorrichtung 10 übereinander) angeordnet.

Jede der Zell-Anordnungsebenen 12, 14 weist zumindest eine Speicherzelle 12a-d, 14a-d auf.

Bevorzugt weist jede Zell-Anordnungsebene 12, 14 aber mehrere Speicherzellen 12a-d, 14a-d auf, die - lediglich exemplarisch - zu mehreren, jeweils auf einer der Zell-Anordnungsebenen 12, 14 benachbarten Batteriezellenstapeln und/oder Batteriemodulen zusammengefasst sein können.

Exemplarisch sind in Figur 1 jeweils vier benachbarte Speicherzellen 12a-d, 14a-d gezeigt.

Zwischen der ersten Zell-Anordnungsebene 12 und der zweiten Zell-Anordnungsebene 14 ist eine Kühlplatte 16 angeordnet.

Die Speicherzellen 12a-d der ersten Zell-Anordnungsebene 12 sind auf einer ersten Oberfläche 16a (siehe z. B. Figuren 2 bis 5) der Kühlplatte 16 angeordnet und z. B. mit dieser thermisch kontaktiert. Beispielsweise können die Speicherzellen 12a-d an der Kühlplatte 16 anliegen.

Darüber hinaus ist die Kühlplatte 16 zu den Speicherzellen 14a-d der zweiten Zell-Anordnungsebene derart beabstandet, dass ein Entgasungsraum 24 gebildet ist.

Im Falle eines (z. B. durch ein thermisches Durchgehen und/oder eine Beschädigung einer der Speicherzellen 14a-d) bedingtes Entgasen ist denkbar, dass das aus der betroffenen Speicherzelle 14a-d entweichende Gas in den Entgasungsraum 24 strömt und z. B. zu einem Auslassventil geleitet wird.

Lediglich exemplarisch ist in Figur 1 ein Entgasen der Speicherzelle 14b sowie ein Strömungspfad 34 nach links symbolisiert. Es ist jedoch ersichtlich, dass dies lediglich exemplarisch ist und selbstverständlich auch ein Entgasen jeder anderen Speicherzelle 14a-d und/oder ein Strömungspfad 34 z. B. nach rechts und/oder in einer Richtung quer und/oder senkrecht zur Zeichenebene denkbar ist.

Auf einer der ersten Oberfläche 16a entgegengesetzten zweiten Oberfläche 16b weist die Kühlplatte mehrere Finnen 18 auf.

Die zweite Oberfläche 16b ist den Speicherzellen 14a-d der zweiten Zell-Anordnungsebene 14 in diesem Ausführungsbeispiel zugewandt.

Die mehreren Finnen ragen bevorzugt in den Entgasungsraum 24 herein.

In dem gezeigten Ausführungsbeispiel sind jeweils einer der Speicherzellen 14a-d der zweiten Zell-Anordnungsebene 14 mehrere Finnen 18 zugeordnet. Dazu können z. B. jeweils mehrere Finnen 18 oberhalb jeder der Speicherzellen 14a-d der zweiten Zell-Anordnungsebene 14 angeordnet sein.

Beispielsweise ist denkbar, dass z. B. direkt oberhalb der mindestens einen Speicherzelle 14a-d der zweiten Zell-Anordnungsebene 14 mehrere (z. B. zwölf) Finnen 18 vorgesehen sind.

Die Speicherzellen 14a-b der zweiten Zell-Anordnungsebene 14 können jeweils eine Entgasungseinrichtung (z. B. ein Entgasungsventil) aufweisen, die ausgebildet ist, die Entgasungsemission (z. B. zumindest abschnittsweise und/oder initial und/oder direkt nach dem Austreten aus der jeweiligen Speicherzelle 14a-d) in Richtung der mehreren Finnen 18 (in Figur 1 z. B. zunächst nach oben) zu leiten.

Denkbar ist ferner, dass die Entgasungsemission an den mehreren Finnen 18 umgelenkt wird und z. B. im Wesentlichen parallel zu den Zell-Anordnungsebenen 12, 14 aus der elektrischen Energiespeichervorrichtung geführt wird (in Figur 1 exemplarisch: nach links).

Das entweichende Gas kann somit an der mehreren Finnen 18 vorbei und/oder zwischen diesen hindurchgeführt werden.

Die mehreren Finnen 18 können derart angeordnet und/oder geformt und/oder dimensioniert sein, dass sie die über die mehreren Finnen 18 strömende Entgasungsemission verwirbeln.

Beispielsweise können die mehreren Finnen 18 dazu quer zu dem Strömungspfad 34 wie hierin offenbart angeordnet sein, um ein Umlenken der Entgasungsemission zu bewirken.

Darüber hinaus können die mehreren Finnen 18 ausgebildet sein, Wärme aus der Entgasungsemission an die Kühlplatte 16 zu übertragen. Dazu können die mehreren Finnen 18 z. B. aus einem gut wärmeleitenden Material, wie z. B. einem Metall, bestehen oder dieses umfassen.

Um eine Bodenflächenkühlung der Speicherzellen 14a-d der zweiten Zell-Anordnungsebene bereitzustellen, kann die elektrische Energiespeichervorrichtung 10 unterhalb der zweiten Zell-Anordnungsebene 14 eine Finnen-lose Kühlplatte 28 aufweisen, auf der die Speicherzellen 14a-d der zweiten Zell-Anordnungsebene 14 angeordnet (und z. B. thermisch kontaktiert) sind.

Figur 2 zeigt eine schematische Teil-Darstellung eines elektrischen Energiespeichervorrichtung 10.

Zur besseren Verdeutlichung wurde auf die Darstellung der Speicherzellen 12a-d der ersten Zell-Anordnungsebene 14 verzichtet.

Die Kühlplatte 16 kann mit einem Kühlfluid durchströmbar sein, um über die erste Oberfläche 16a Wärme der mindestens einen Speicherzelle 12a-d der ersten Zell-Anordnungsebene 12 und/oder über die zweite Oberfläche 16b Wärme der Entgasungsemission abzutransportieren.

Die Kühlplatte kann z. B. einen Kühlmittel-Zulauf 30 und einen Kühlmittel-Ablauf 32 aufweisen, über die der Kühlplatte 16 Kühlmittel zuführbar und abführbar ist.

Bevorzugt ist die Kühlplatte 16 von dem Kühlmittel-Zulauf 30 zum Kühlmittel-Ablauf 32 mit Kühlmittel durchströmbar, wobei das Kühlmittel z. B. in einen Nahbereich der mehreren Finnen 18 förderbar ist.

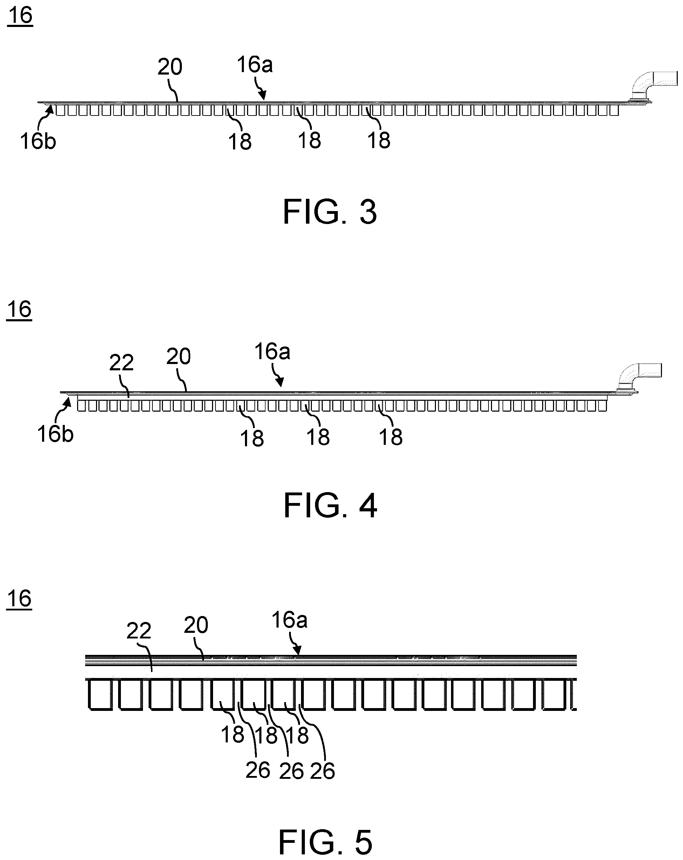

Die Figuren 3 und 4 zeigen zwei Kühlplatten 16 gemäß zweier Ausführungsformen.

Im Unterschied zu Figur 3 kann die Kühlplatte 16 aus Figur 4 eine als Hitzeschutz fungierende Wärmeschutzplatte 22 (z. B. Stahlplatte) aufweisen.

Beispielsweise kann die Kühlplatte 16 einen im Wesentlichen quaderförmigen Hauptkörperbereich 20 und die im Wesentlichen quaderförmige Wärmeschutzplatte 22 (z. B. eine Stahlplatte) aufweisen.

Die Wärmeschutzplatte 22 kann zwischen den mehreren Finnen 18 und dem Hauptkörperbereich 20 angeordnet sein.

Denkbar ist, dass heiße Partikel der Entgasungsemission und/oder die Entgasungsemission selbst die Kühlplatte 16 damit nicht erreichen können, wodurch diese vor einem schädigenden Einfluss geschützt sein kann.

Figur 4 zeigt eine Vergrößerung eines Ausschnittes der Kühlplatte 16 aus Figur 5.

Besonders bevorzugt können die mehreren Finnen 18 derart zueinander versetzt angeordnet sein, dass zwischen jeweils zwei benachbarten Finnen 18 der mehreren Finnen 18 jeweils eine Gasdurchtrittsöffnung 26 gebildet ist.

Von den Gasdurchtrittsöffnungen 26 sind - lediglich exemplarisch - drei Gasdurchtrittsöffnungen 26 mit Bezugszeichen versehen, wobei die Kühlplatte 16 in diesem Ausführungsbeispiel auch noch weitere Finnen und Gasdurchstrittsöffnungen aufweist, die nicht gesondert mit Bezugszeichen kenntlich gemacht wurden.

Darüber hinaus ist grundsätzlich denkbar, dass die mehreren Finnen 18 z. B. in mehreren in einer Richtung senkrecht zur Zeichenebene angeordnete und zueinander beabstandete Finnen-Reihen vorgesehen sind, zwischen denen ebenfalls Gasdurchtrittsöffnungen vorgesehen sind.

Die Gasdurchtrittsöffnungen 18 können z. B. Umlenkpositionen und/oder Engstellen für die Entgasungsemission bilden, wodurch der Entgasungsemission Wärmeenergie entzogen werden kann und/oder Partikel ausfallen können.

In diesem Ausführungsbeispiel können die mehreren Finnen 18 z. B. ein Material aufweisen, dessen Schmelzpunkt unterhalb einer Partikeltemperatur der Entgasungsemission liegt, um die Partikel durch ein (z. B. lokales) Verschmelzen mit den mehreren Finnen 18 einzufangen und/oder die Entgasungsemission zu kühlen.

In den beschriebenen Ausführungsbeispielen sind nur zwei Zell-Anordnungsebenen 12, 14 gezeigt.

In hier nicht näher beschriebenen Ausführungsbeispielen kann die elektrische Energiespeichervorrichtung 10 aber auch mehr als zwei Zell-Anordungsebenen 12, 14 aufweisen, wobei zwischen jeweils zwei benachbarten Zell-Anordungsebenen jeweils eine Kühlplatte wie hierin offenbart angeordnet ist.

Beispielsweise kann die elektrische Energiespeichervorrichtung 10 also eine weitere Zell-Anordnungsebene aufweisen. Die weitere Zell-Anordnungsebene kann mindestens eine Speicherzelle (z. B. mehrere Speicherzellen) aufweisen. Die weitere Zell-Anordnungsebene kann benachbart zu (z. B. oberhalb) der ersten Anordnungsebene 12 angeordnet sein.

Die elektrische Energiespeichervorrichtung 10 kann ferner eine weitere Kühlplatte aufweisen, die zwischen der ersten Zell-Anordnungsebene 12 und der weiteren Zell-Anordnungsebene angeordnet ist. Die weitere Kühlplatte kann eine Oberfläche und eine weitere Oberfläche aufweisen. Auf der Oberfläche kann die mindestens eine Speicherzelle der weiteren Zell-Anordnungsebene angeordnet sein. Die weitere Kühlplatte kann an der weiteren Oberfläche weitere Finnen aufweisen, die der mindestens einen Speicherzelle 12a-d der ersten Zell-Anordnungsebene 12 zugewandt sind, um Partikel einer Entgasungsemission aus der mindestens einen Speicherzelle 12a-d der ersten Zell-Anordnungsebene 12 einzufangen und/oder eine Entgasungsemission aus der mindestens einen Speicherzelle 12a-d der ersten Zell-Anordnungsebene 12 zu kühlen.

Die hierin beschriebene Technik soll dabei jedoch nicht auf drei Zell-Anordnungsebenen beschränkt sein. Für den Fachmann ist ersichtlich, dass die hierin offenbarte Technik auf beliebig viele übereinander angeordnete Zell-Anordnungsebenen anwendbar ist.

Die Erfindung ist nicht auf die oben beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 10: elektrische Energiespeichervorrichtung
- 12: erste Zell-Anordnungsebene
- 12a-d: Speicherzellen der ersten Zell-Anordnungsebene
- 14: zweite Zell-Anordnungsebene
- 14a-d: Speicherzellen der zweiten Zell-Anordnungsebene
- 16: Kühlplatte
- 16a: erste Oberfläche der Kühlplatte
- 16b: zweite Oberfläche der Kühlplatte
- 18: Finnen
- 20: Hauptkörperbereich
- 22: Wärmeschutzplatte
- 24: Entgasungsraum
- 26: Gasdurchtrittsöffnungen
- 28: Finnen-lose Kühlplatte
- 30: Kühlmittel-Zulauf
- 32: Kühlmittel-Ablauf
- 34: Strömungspfad

## Patentansprüche

1. Elektrische Energiespeichervorrichtung (10) für ein Fahrzeug, aufweisend:
eine erste Zell-Anordnungsebene (12), aufweisend mindestens eine Speicherzelle (12a-d), vorzugsweise mehrere Speicherzellen (14a-d);
eine zweite Zell-Anordnungsebene (14), aufweisend mindestens eine Speicherzelle (14a-d), vorzugsweise mehrere Speicherzellen (14a-d), wobei die zweite Zell-Anordnungsebene (14) benachbart zu, vorzugsweise unterhalb, der ersten Zell-Anordnungsebene (12) angeordnet ist; und
eine Kühlplatte (16), die zwischen der ersten Zell-Anordnungsebene (12) und der zweiten Zell-Anordnungsebene (14) angeordnet ist und die eine erste Oberfläche (16a) und eine zweite Oberfläche (16b) aufweist, wobei auf der ersten Oberfläche (16a) die mindestens eine Speicherzelle (12a-d) der ersten Zell-Anordnungsebene (12) angeordnet ist und die Kühlplatte (16) an der zweiten Oberfläche (16b) mehrere Finnen (18) aufweist, die der mindestens einen Speicherzelle (14a-d) der zweiten Zell-Anordnungsebene (14) zugewandt sind, um Partikel einer Entgasungsemission aus der mindestens einen Speicherzelle (14a-d) der zweiten Zell-Anordnungsebene (14) einzufangen und/oder eine Entgasungsemission aus der mindestens einen Speicherzelle (14a-d) der zweiten Zell-Anordnungsebene (14) zu kühlen.

2. Elektrische Energiespeichervorrichtung (10) nach Anspruch 1, wobei die Kühlplatte (16) mit einem Kühlfluid durchströmbar ist, um über die erste Oberfläche (16a) Wärme der mindestens einen Speicherzelle (12a-d) der ersten Zell-Anordnungsebene (12) und/oder über die zweite Oberfläche (16b) Wärme der Entgasungsemission abzutransportieren.

3. Elektrische Energiespeichervorrichtung (10) nach einem der vorhergehenden Ansprüche, wobei die Kühlplatte (16) einen Hauptkörperbereich (20) und eine Wärmeschutzplatte (22), vorzugsweise Stahlplatte, aufweist, wobei die Wärmeschutzplatte (22) zwischen den mehreren Finnen (18) und dem Hauptkörperbereich (20) angeordnet ist.

4. Elektrische Energiespeichervorrichtung (10) nach einem der vorhergehenden Ansprüche, wobei die zweite Oberfläche (16b) der Kühlplatte (16) zu der zweiten Zell-Anordnungsebene (14) derart beabstandet angeordnet ist, dass ein Entgasungsraum (24) zur Aufnahme der Entgasungsemission gebildet ist, wobei die mehreren Finnen (18) in den Entgasungsraum (24) hineinragen.

5. Elektrische Energiespeichervorrichtung (10) nach einem der vorhergehenden Ansprüche, wobei die mehreren Finnen (18) derart zueinander versetzt angeordnet sind, dass zwischen jeweils zwei benachbarten Finnen (18) der mehreren Finnen (18) jeweils eine Gasdurchtrittsöffnung (26) gebildet ist.

6. Elektrische Energiespeichervorrichtung (10) nach einem der vorhergehenden Ansprüche, wobei die mehreren Finnen (18) angeordnet und/oder geformt sind, die über die mehreren Finnen (18) strömende Entgasungsemission zu verwirbeln.

7. Elektrische Energiespeichervorrichtung (10) nach einem der vorhergehenden Ansprüche, wobei die mehreren Finnen (18) ausgebildet sind, Wärme aus der Entgasungsemission an die Kühlplatte (16) zu übertragen.

8. Elektrische Energiespeichervorrichtung nach einem der vorhergehenden Ansprüche, wobei die mehreren Finnen (18) an die Kühlplatte (16) und/oder die Wärmeschutzplatte (22) geschweißt sind.

9. Elektrische Energiespeichervorrichtung (10) nach einem der vorhergehenden Ansprüche, wobei die mehreren Finnen (18) ein Material aufweisen, dessen Schmelzpunkt unterhalb einer Partikeltemperatur der Entgasungsemission liegt, um die Partikel durch ein Verschmelzen mit den mehreren Finnen (18) einzufangen und/oder die Entgasungsemission zu kühlen.

10. Elektrische Energiespeichervorrichtung (10) nach einem der vorhergehenden Ansprüche, wobei der mindestens einen Speicherzelle (14a-d) der zweiten Zell-Anordnungsebene (14) mehrere Finnen (18) zugeordnet sind.

11. Elektrische Energiespeichervorrichtung (10) nach einem der vorhergehenden Ansprüche, wobei die mindestens eine Speicherzelle (14a-b) der zweiten Zell-Anordnungsebene (14) eine Entgasungseinrichtung, vorzugsweise ein Entgasungsventil, aufweist, die ausgebildet ist, die Entgasungsemission in Richtung der mehreren Finnen (18) zu leiten.

12. Elektrische Energiespeichervorrichtung (10) nach einem der vorhergehenden Ansprüche, wobei:
die mindestens eine Speicherzelle (12a-d) der ersten Zell-Anordnungsebene (12) mehrere Speicherzellen (12a-d) umfasst, die zumindest einen Batteriezellenstapel, vorzugsweise mehrere benachbart zueinander angeordnete Batteriezellestapel, und/oder zumindest ein Batteriemodul, vorzugsweise mehrere benachbart zueinander angeordnete Batteriemodule, bilden; und/oder
die mindestens eine Speicherzelle (14a-d) der zweiten Zell-Anordnungsebene (14) mehrere Speicherzellen (14a-d) umfasst, die zumindest einen Batteriezellenstapel, vorzugsweise mehrere benachbart zueinander angeordnete Batteriezellestapel, und/oder zumindest ein Batteriemodul, vorzugsweise mehrere benachbart zueinander angeordnete Batteriemodule, bilden.

13. Elektrischer Energiespeichervorrichtung (10) nach einem der vorhergehenden Ansprüche, aufweisend:
eine weitere Zell-Anordnungsebene, die mindestens eine Speicherzelle, vorzugsweise mehrere Speicherzellen, aufweist und die benachbart zu, vorzugsweise oberhalb, der ersten Anordnungsebene (12) angeordnet ist; und
eine weitere Kühlplatte, die zwischen der ersten Zell-Anordnungsebene (12) und der weiteren Zell-Anordnungsebene angeordnet ist und die eine Oberfläche und eine weitere Oberfläche aufweist, wobei auf der Oberfläche die mindestens eine Speicherzelle der weiteren Zell-Anordnungsebene angeordnet ist und die weitere Kühlplatte an der weiteren Oberfläche weitere Finnen aufweist, die der mindestens einen Speicherzelle (12a-d) der ersten Zell-Anordnungsebene (12) zugewandt sind, um Partikel einer Entgasungsemission aus der mindestens einen Speicherzelle (12a-d) der ersten Zell-Anordnungsebene (12) einzufangen und/oder eine Entgasungsemission aus der mindestens einen Speicherzelle (12a-d) der ersten Zell-Anordnungsebene (12) zu kühlen.

14. Elektrische Energiespeichervorrichtung (10) nach einem der vorhergehenden Ansprüche, wobei die elektrische Energiespeichervorrichtung (10) eine Finnen-lose Kühlplatte (28) aufweist, auf der die mindestens eine Speicherzelle (14a-d) der zweiten Zell-Anordnungsebene (14) angeordnet ist.

15. Fahrzeug, vorzugsweise Kraftfahrzeug, aufweisend eine elektrische Energiespeichervorrichtung (10) nach einem der vorhergehenden Ansprüche.
